Europäisches Patentamt

European Patent Office

Office européen des brevets

(19)

(11) Veröffentlichungsnummer: 0 017 877
B1

(12) EUROPÄISCHE PATENTSCHRIFT

(45) Veröffentlichungstag der Patentschrift :
01.09.82

(51) Int. Cl.³ : **B 23 K 9/12**

(21) Anmeldenummer : 80101826.8

(22) Anmeldetag : 04.04.80

(54) Planetenradvorschub für abschmelzende Schweissdrähte.

(30) Priorität : 14.04.79 DE 2915320

(43) Veröffentlichungstag der Anmeldung :
29.10.80 (Patentblatt 80/22)

(45) Bekanntmachung des Hinweises auf die Patenterteilung : 01.09.82 Patentblatt 82/35

(84) Benannte Vertragsstaaten :
AT BE CH DE FR GB IT LI NL SE

(56) Entgegenhaltungen :
DE A 2 812 924
FR A 2 325 584
US A 4 172 545

(73) Patentinhaber : Carl Cloos Verwaltungsgesellschaft
oHG
Postfach 121
D-6342 Halger (DE)

(72) Erfinder : Cloos, Erwin
Bergstrasse 2
D-6342 Halger (DE)

(74) Vertreter : Schlee, Richard, Dipl.-Ing. et al
Patentanwälte Dipl.-Ing. R. Schlee Dipl.-Ing. A.
Missling Bismarckstrasse 43
D-6300 Lahn-Giessen 1 (DE)

Imprimerie Jouve, 18, rue St-Denis, 75001 Paris, France

Planetenradvorschub für abschmelzende Schweißdrähte

Die Erfindung betrifft einen Planetenradvorschub für abschmelzende Schweißdrähte mit mindestens zwei Planetenrädern, deren Achsen mit der Schweißdrahtachse einen Winkel bilden, die radial zu dem Schweißdraht an einem um diesen rotierenden, von der Motorwelle angetriebenen Lagerteil angeordnet und unter Vorspannung gegen den Schweißdraht anpreßbar sind.

Ein Linearantrieb der vorstehend genannten Art ist z.B. aus der DE-C-20 55 721 bekannt. Die Planetenräder liegen unter Druck auf der Oberfläche des Drahtes an und laufen in einer zur Drehachse rechtwinkligen Ebene um. Da die Planetenräder mit der Drahtachse einen Winkel bilden, wird der Draht durch die umlaufenden Planetenräder vorgeschoben. Die als Kolben ausgebildeten Radhalter des bekannten Planetenradvorschubes stützen sich an einer konischen Zylinderfläche einer Spannmutter ab, die um den Schweißdraht drehbar ist. Die Spannmutter ist axial in Richtung der Drahtachse verschiebbar. Man erreicht hierdurch eine gleichmäßige Zustellung der Planetenräder durch eine einzige Spannmutter.

Aus dem DE-U-76 20 049 ist es ferner bekannt, die Planetenräder an einem zweiarmigen Hebel anzuordnen, dessen anderes Ende auf einem Spannkonusring gleitet, der gleichfalls um die Drahtachse drehbar und in axialer Richtung zur Drahtachse verschiebbar ist. Der Spannkonusring wird in axialer Richtung durch eine Feder beaufschlagt, wodurch die Fliehkräfte kompensiert und für jeden Drahtdurchmesser ein reproduzierbarer Anpreßdruck erhalten werden soll.

Diese bekannten Planetenradvorschübe sind zum einen relativ kompliziert im Aufbau und damit teuer in der Herstellung und erfordern zum anderen bei jedem erneuten Einlegen des Schweißdrahtes erhebliche Einstellarbeiten. So muß z.B. bei einem Planetenradvorschub gemäß dem DE-U-76 20 049 jedes Mal eine Mutter verdreht werden, wodurch die Planetenräder voneinander wegbewegt werden, damit der Draht eingeschoben werden kann. Anschließend erfolgt die Neueinstellung des Anpreßdruckes. Das gleiche gilt für einen Planetenradvorschub nach der DE-C-20 55 721.

Der Erfindung liegt die Aufgabe zugrunde, einen Planetenradvorschub der eingangs genannten Art so auszubilden, daß dieser äußerst einfach im Aufbau und damit kostengünstig in der Herstellung ist und nur einen geringen Aufwand für die Einstellung der Planetenräder erfordert.

Diese Aufgabe wird erfindungsgemäß dadurch gelöst, daß das Lagerteil aus einer über den wesentlichen Teil ihrer Länge in Achsrichtung geschlitzten Hülse besteht, daß an je einem Teil des geschlitzten Endes des Lagerteiles ein Planetenrad ist und daß die Zustellung des Lagerteiles und damit der Planetenräder durch axiale oder radiale Relativbewegung zwischen Lagerteil und Spannstück erfolgt und das Spannstück das Lagerteil umschließt oder durchsetzt. Gemäß einer weiteren Lösung der Erfindung besteht das Spannstück aus einem Stellring, wobei die Zustellung der Planetenräder durch Verringerung des Durchmessers des Stellringes erfolgt. Gemäß einer weiteren Lösung der Erfindung kann das Spannstück aus einer Abstandshülse bestehen, die in einer Bohrung im Lagerteil angeordnet ist und zwei Schrauben aufnimmt, deren Schraubenköpfe sich auf den beiden Hälften des Lagerteiles abstützen, so daß durch Drehen der Schrauben der Abstand der Planetenräder zueinander eingestellt werden kann.

Ein erfindungsgemäßer Planetenradvorschub ist infolge seines einfachen Aufbaues kostengünstig herzustellen, so daß es wirtschaftlich vertretbar ist, einen Planetenradvorschub nur für einen eng begrenzten Durchmesserbereich einzusetzen. Der Austausch des gesamten Planetenradvorschubes beim Wechseln der Schweißdrahtstärke ist dann kostengünstiger als das zeitraubende Einstellen des Planetenradvorschubes auf die neue Schweißdrahtstärke. Ein erfindungsgemäßer Planetenradvorschub wird werksseitig auf einen bestimmten Schweißdrahtdurchmesserbereich eingestellt. Beim Benutzer braucht eine Einstellung nicht mehr zu erfolgen.

Um die Grundeinstellung eines erfindungsgemäßen Planetenradvorschubes so einfach wie möglich zu gestalten, besitzt das Spannstück vorteilhaft eine kalibrierte Innenbohrung und das Lagerstück, genauer das eine Spannhülse bildende Teil des Lagerstückes, einen definierten sich zum freien Ende hin stetig vergrößernden Außendurchmesser und einen Anschlag der sich an das Spannstück dann anlegt, wenn der geforderte Abstand der Planetenräder erreicht ist. Für den Fall, daß ein Stellring für die Einstellung der Planetenräder verwendet wird, kann, um die Einstellung zu erleichtern, der Stellring so gewählt werden, daß bei maximal möglicher Zustellung gerade der gewünschte Anpreßdruck der Planetenräder am Schweißdraht erreicht wird.

Weitere vorteilhafte Ausgestaltungen der Erfindung gehen aus den Unteransprüchen hervor.

Ein Ausführungsbeispiel der Erfindung ist im folgenden anhand der Zeichnung näher beschrieben, in dieser zeigen :

Figur 1 eine Seitenansicht, teilweise im Schnitt, eines erfindungsgemäßen Planetenradvorschubes mit angeflanschten Motor und Befestigungseinrichtung für das Schlauchpaket,

Figur 2 einen Schnitt nach Linie II-II in Fig. 1,

Figur 3 eine weitere Ausführungsform eines Planetenradvorschubes gemäß der Erfindung, teilweise im Schnitt,

Figur 4 einen Schnitt nach Linie IV-IV in Fig. 3,

Figur 5 ein weiteres Ausführungsbeispiel eines Planetenradvorschubes gemäß der Erfindung, teilweise im Schnitt,

Figur 6 einen Schnitt nach Linie VI-VI in Fig. 5 und

Figuren 7-8 ein weiteres Ausführungsbeispiel gemäß der Erfindung.

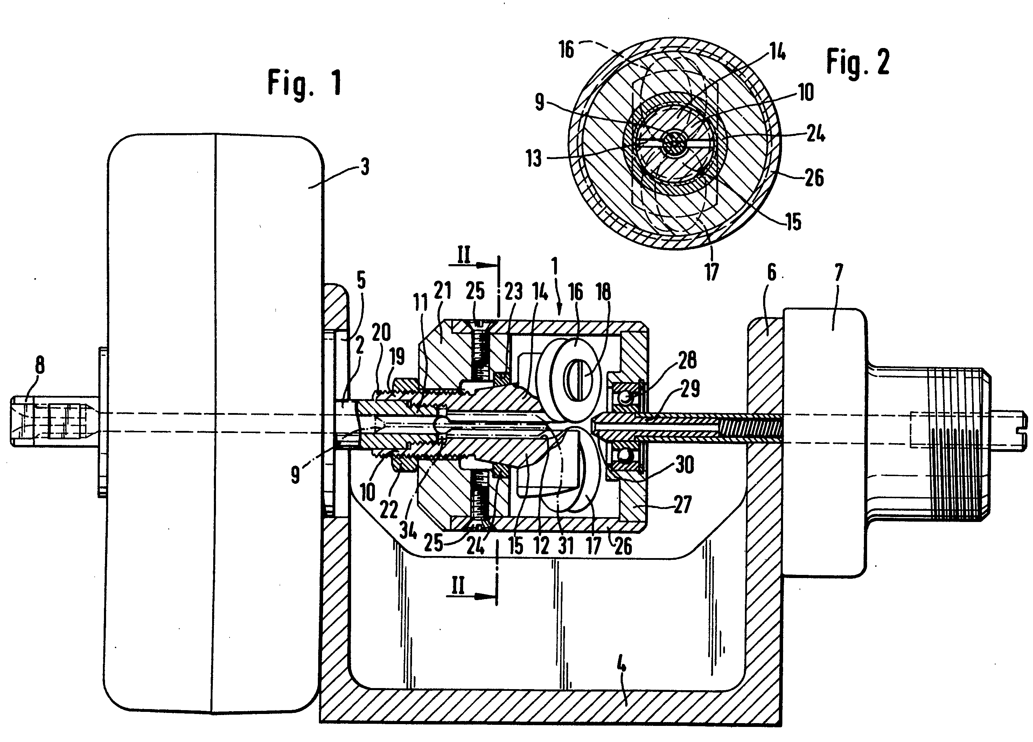

In Fig. 1 ist ein Linearantrieb 1 an der Motorwelle 2 eines Motors 3 befestigt. Der Motor 3 selber ist an einem U-förmig ausgebildeten Flansch 4 angeschraubt, durch dessen Öffnung 5 die Motorwelle 2 greift. An dem gegenüberliegenden Schenkel 6 des Flansches 4 ist das Anschlußstück 7 für ein nicht weiter dargestelltes Schlauchpaket befestigt, an dessen Ende in bekannter Weise eine Schweißpistole angebracht ist.

Der mit Hilfe des Linear-Antriebes bzw. des Planetenradvorschubes 1 zu transportierende Schweißdraht (nicht dargestellt) wird über ein Einführungsstück 8 in die hohl ausgebildete Motorwelle 2 eingeführt und gelangt von dort in eine in die Motorwelle 2 eingeschobene Düse 9. Die Düse hat einen Bund 34 und ist mit Hilfe eines Lagerteiles 10 gehalten. Das Lagerteil 10 ist auf ein reduziertes und mit Gewinde versehenes Endstück 11 der Motorwelle 2 aufgeschraubt und somit drehfest mit dieser verbunden.

Das Lagerteil 10 ist mit einer die Düse 9 aufnehmenden und das Lagerteil durchsetzenden Bohrung 12 versehen, die wesentlich größer ist als es zur Aufnahme der Düse 9 erforderlich ist. Wie insbesondere aus Fig. 2 zu ersehen ist, ist das Lagerteil 10 in seinem vorderen Bereich in axialer Richtung über einen erheblichen Teil seiner Länge mit einem Schlitz 13 versehen, wodurch das Lagerteil 10 in seinem vorderen Bereich in Form einer geschlitzten Hülse in zwei Hälften 14 und 15 aufgeteil wird. An der Hälfte 14 des Lagerteils 10 ist das Planetenrad 16 und an der Hälfte 15 das Planetenrad 17 an Achsen 18 drehbar gelagert. Die Planetenräder 16 und 17 sind somit drehfest mit der Halterung 10 und damit mit der Motorwelle 2 verbunden.

Auf der Außenseite des anderen Endes 19 des Lagerteiles 10 ist ein Gewinde 20 angebracht. Über dieses Gewinde ist axial Verschiebbar ein Spannstück 21 aufgeschoben, das mit Hilfe einer Mutter 22, die auf das Gewinde 20 des Lagerteiles geschraubt ist, in der gewünschten Stellung gehalten wird.

Das Spannstück 21 hat in seinem vorderen Bereich eine kalibrierte Innenbohrung, die durch einen in eine Bohrung 23 des Spannstückes eingesetzten Ring 24 bestimmt ist. Die außenfläche des Lagerstückes 10 ist im Bereich des Schlitzes 13 konisch ausgebildet, so daß beim Verschieben des Lagerstückes 21 in Richtung auf die Planetenräder 16, 17 hin, die beiden Hälften 14, 15 des Lagerteiles zusammengedrückt werden. Da an diesen Hälften die Planetenräder 16, 17 mit ihren Achsen 18 befestigt sind, werden diese auch gleichzeitig gegeneinanderbewegt und, sofern ein Schweißdraht eingeschoben ist, gegen dessen Oberfläche gepreßt. Der Anpreßdruck läßt sich somit durch die relative Verschiebung von Spannstück 21 und Lagerteil 10 gegeneinander feinfühlig einstellen.

Auf dem Spannstück 21 ist mittels zweier Schrauben 25 eine Hülse 26 befestigt, die durch eine Platte 27 verschlossen ist. In die Mitte dieser Platte ist ein Lager 28 eingesetzt, dessen Innendurchmesser so gewählt ist, daß dieser eine Einlaufdüse 29 aufnimmt, deren Ende 30, wie auch das Ende 31, der Düse 9 so nah wie möglich im Bereich der Planetenräder 16, 17 endet. Hierdurch wird eine exakte Führung des Schweißdrahtes im Bereich der Planetenräder erreicht, was bei den bekannten Linearantrieben nicht der Fall ist. Hier konnte es vorkommen, daß der Schweißdraht seitlich aus den Planetenrollen herauslief und ein Förderstillstand eintrat. Die Behebung einer derartigen Störung ist äußerst zeitaufwendig.

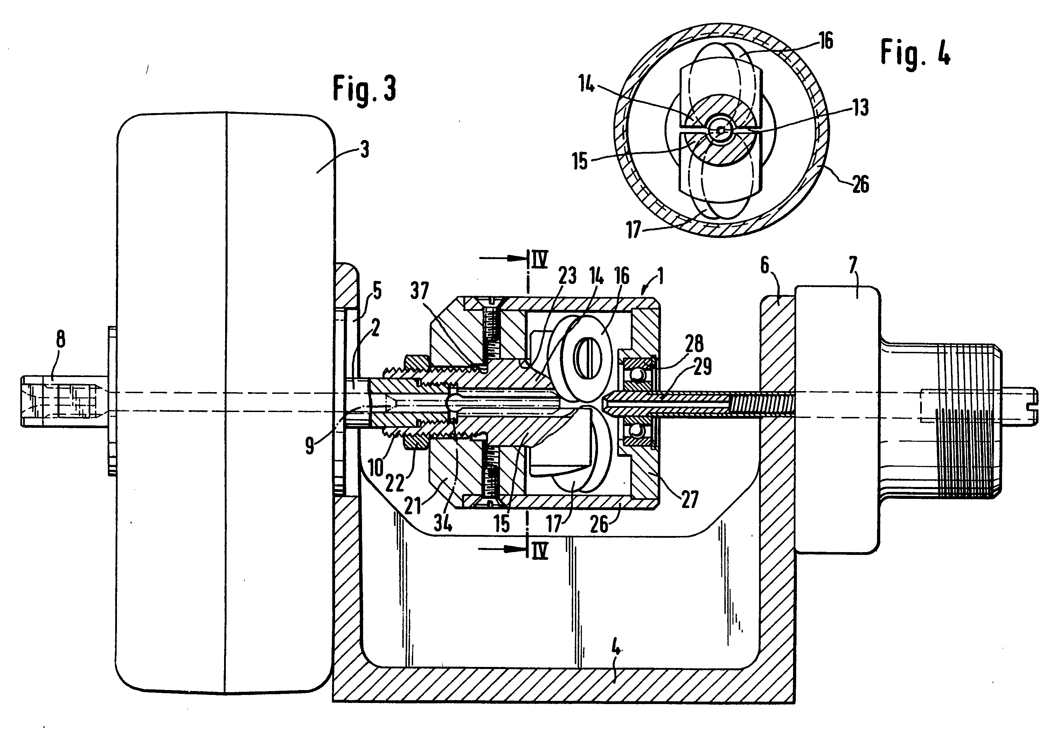

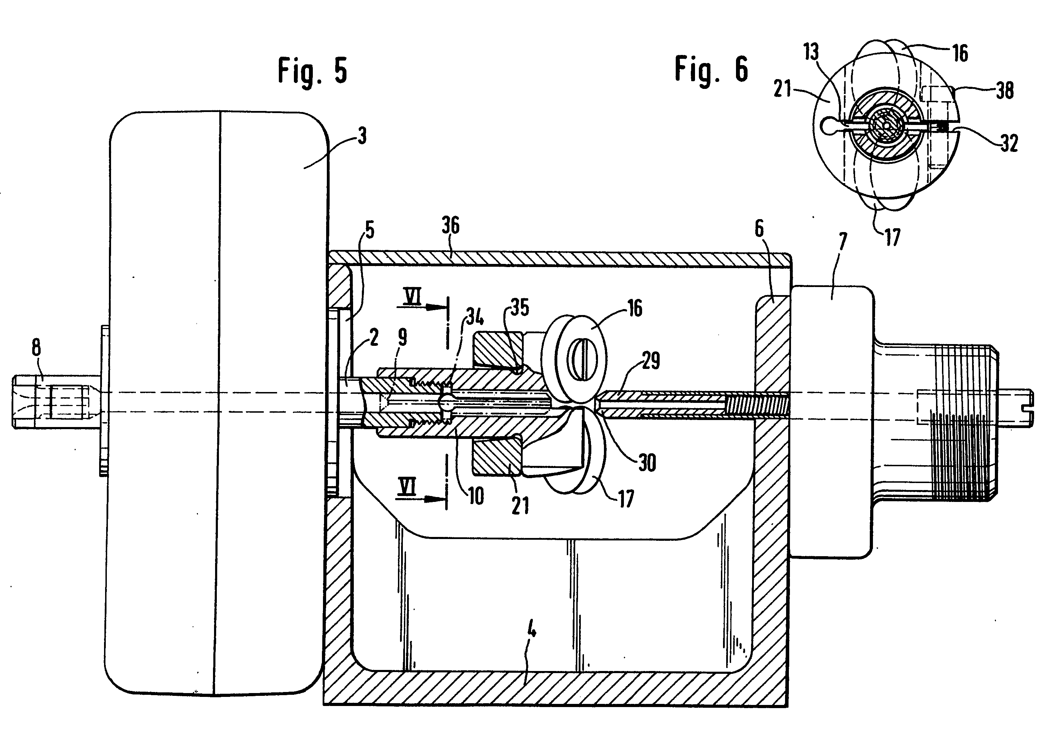

Das in den Fig. 3 und 4 gezeigte Ausführungsbeispiel eines Linearantriebes 1 unterscheidet sich von dem zuvor beschriebenen im wesentlichen in der Ausführung der Bohrung 23 im Spannstück 21 und in der Ausbildung der Oberfläche des geschlitzten Teiles des Lagerteiles 10.

Das Spannstück 21 ist bei dem Ausführungsbeispiel nach Fig. 3 und 4 mit einer glatten Bohrung 23 versehen, die mit einem ganz bestimmten, einem Drahtdurchmesserbereich entsprechenden Durchmesser versehen ist. Die Oberfläche des Lagerteils 10 ist konisch ausgebildet. Des weiteren weist das Lagerteil einen Anschlag 37 auf, der sich an das Spannstück 21 dann anlegt, wenn der geforderte Abstand der Planetenräder 16, 17 erreicht ist. Um diese Abstand einzustellen, muß die Schraube 22 soweit angezogen werden, bis das Lagerteil 10 mit seinem Anschlag 37 am Spannstück 21 anliegt.

Das in Fig. 5 und 6 dargestellte Ausführungsbeispiel eines Linearantriebes unterscheidet sich von den vorhergehenden im wesentlichen dadurch, daß das Spannstück 21 als Stellring ausgebildet ist. Dieser Stellring 21 ist in Fig. 6 zu sehen. Dieser wird in bekannter Weise mit Hilfe einer Schraube 38 zusammengepreßt. Erleichtert wird die Einstellung des Linearantriebes erheblich, wenn der Innendurchmesser des Stellringes 21 bei vollständig angezogener Schraube 38, d.h. also, wenn der Schlitz 32 Null wird, der geforderten Einstellung des Linearantriebes entspricht. Wie Fig. 5 erkennen läßt, ist die Innenbohrung des Stellringes 21 leicht konisch ausgebildet und greift in eine Hinterschneidung 35 im Lagerteil 10, wodurch ein sicherer Halt des Stellringes 21 erhalten wird.

Im Gegensatz zu den vorherigen Ausführungsbeispielen ist die Einlaufdüse 29 nur in der Wandung 6 des Flansches 4 gehalten. Es könnte jedoch auch in diesem Ausführungsbeispiel das vordere Ende der Einlaufdüse 29 in einem weiteren Lager 28 gehalten werden, das ähnlich wie in den vorher gezeigten Ausführungsbeispielen angeordnet wäre. Der Flansch 4 ist nach außen hin durch einen Deckel 36 verschlossen.

Das Spannstück 21 kann, insbesondere wenn dieses als Stellring ausgebildet ist, mit einer Ringfeder versehen sein, die die Planetenräder mit konstantem Druck gegen den Schweißdraht preßt. Hierdurch wird ein Ausgleich bei sehr hohen Drahtdurchmesser-Toleranzen erreicht. Es ist auch möglich, eine derartige Feder am Lagerteil anzuordnen.

Es ist selbstverständlich auch möglich, mit den erfindungsgemäßen Linearantrieben Schweißdrähte mit erheblich unterschiedlichen Drahtdurchmessern zu fördern, was ohne weiteres bei der Ausführungsform mit einem Stellring oder aber mit einer konischen Außenfläche des Lagerteiles ohne Anschlag möglich ist, jedoch hat es sich als vorteilhaft erwiesen, Linearantriebe nur für einen eng begrenzten Drahtdurchmesserbereich auszulegen. Die erfindungsgemäßen Linearantriebe werden werksseitig auf einen ganz bestimmten Drahtdurchmesser eingestellt, so daß beim Betrieb keine Einstellarbeiten mehr vorgenommen werden. Da darüberhinaus die Federwege für die Planetenräder nur sehr gering sind, kann das Einfädeln eines neuen Drahtes in den Linearantrieb ohne besondere Schwierigkeiten erfolgen. Die Planetenrollen werden durch den Draht auseinandergedrückt. Ein erfindungsgemäßer Linearantrieb benötigt somit keine Einstellungsarbeit durch den Anwender.

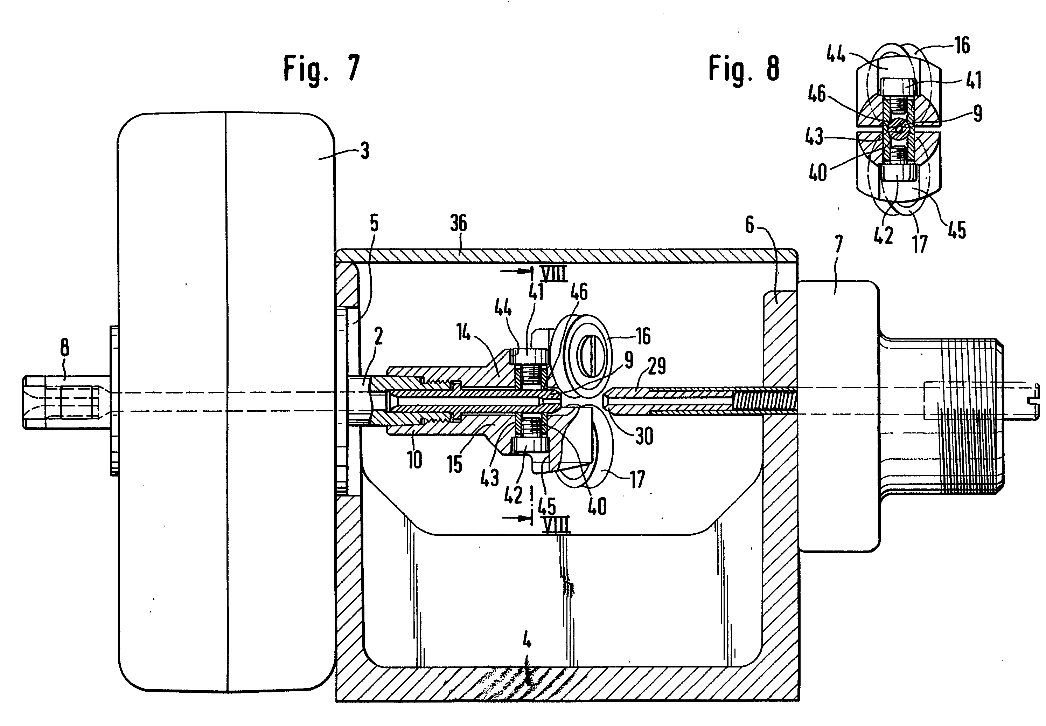

Bei dem in den Fig. 7-9 dargestellten Ausführungsbeispiel sind gleiche Teile mit gleichen Bezugszeichen versehen. Dieses Ausführungsbeispiel unterscheidet sich von den vorhergehenden dadurch, daß das Spannstück aus einer Abstandshülse 40 besteht, die ein Innengewinde aufweist, in das zwei Schrauben 41 und 42 einschraubbar sind. Die Distanzhülse 40 ist in einer radialen Bohrung 43 des Lagerteiles 10 eingesetzt, die die beiden Hälften 14 und 15 des Lagerteiles 10 durchgreift. Oberhalb der Hülse 40 erweitert sich die Bohrung 43 zu einer größeren Bohrung 44 und 45, wobei der Kopf der Schrauben 41 und 42 so groß gewählt ist, daß dieser auf die Hälften 14, 15 des Lagerteiles aufliegt.

Wie am besten aus Fig. 7 und 8 zu ersehen ist, hat die Abstandshülse 40 eine zentrale Bohrung 46, durch die der zu transportierende Schweißdraht einschließlich der Düse 9 greift.

Die Zustellung der Planetenräder 16 und 17 erfolgt durch Eindrehen der Schrauben 41, 42 in die mit Gewinde versehene Abstandshülse 40. Hierdurch werden durch die Schraubenköpfe 41, 42 die Hälften 14, 15 des Lagerteiles 10 solange zusammengepreßt, bis die Planetenräder 16, 17 mit dem geforderten Druck auf dem Schweißdraht aufliegen. Hierdurch ist gewährleistet, daß dieser auch bei hohen Drehzahlen beibehalten wird.

**Ansprüche**

1. Planetenradvorschub für abschmelzende Schweißdrähte mit mindestens zwei Planetenrädern (16, 17), deren Achsen (18) mit der Schweißdrahtachse einen Winkel bilden, die radial zum Schweißdraht an einem um diesen rotierden, von der Motorwelle (2) angetriebenen Lagerteil (10) angeordnet und unter Vorspannung gegen den Schweißdraht anpreßbar sind, dadurch gekennzeichnet, daß das Lagerteil (10) aus einer über den wesentlichen Teil ihrer Länge in Achsrichtung geschlitzten Hülse besteht, daß an je einem Teil des geschlitzten Endes (14, 15) des Lagerteiles ein Planetenrad (16, 17) angeordnet ist und daß die Zustellung des Lagerteiles (10) und damit der Planetenräder (16, 17) durch axiale oder radiale Relativbewegung zwischen Lagerteil (10) und einem Spannstück (21, 40, 41, 42) erfolgt und das Spannstück das Lagerteil (10) umschließt oder durchsetzt.

2. Vorschub nach Anspruch 1, dadurch gekennzeichnet, daß das Spannstück (21) mit einer kalibrierten Bohrung (23) und das Lagerteil (10) im geschlitzten Bereich mit einem definierten, sich zum freien Ende hin stetig vergrößerndem Außendurchmesser versehen ist.

3. Vorschub nach Anspruch 2, dadurch gekennzeichnet, daß das Lagerteil (10) mit einem Anschlag (37) versehen ist, der die axiale Verschiebung des Lagerteiles (10) relativ zum Spannstück (21) begrenzt.

4. Vorschub nach Anspruch 1, dadurch gekennzeichnet, daß die Außenfläche im geschlitzten Bereich des Lagerteiles (10) konisch ausgebildet ist.

5. Vorschub nach einem der Ansprüche 1 bis 4, dadurch gekennzeichnet, daß das den Planetenrädern (16, 17) gegenüberliegende Ende des Lagerteiles (10) mit einem Außengewinde (20) versehen ist, das das Spannstück (21) durchgreift und die Verspannung von Spannstück (21) und Lagerteil (10) durch eine auf das Gewinde (20) aufgeschraubte und am Spannstück anliegende Mutter (22) erfolgt.

6. Planetenradvorschub nach Anspruch 1, dadurch gekennzeichnet, daß die Zustellung des Lagerteiles (10) und damit der Planetenräder (16, 17) durch einen auf das Lagerteil (10) aufgeschobenen Stellring (21) erfolgt, dessen Durchmesser einstellbar ist.

7. Vorschub nach einem der Ansprüche 1 bis 6, dadurch gekennzeichnet, daß im Lagerteil eine Düse (9) für die Führung des Schweißdrahtes eingesetzt ist, die unmittelbar vor den Planetenrädern (16, 17) endet.

8. Vorschub nach Anspruch 7, dadurch gekennzeichnet, daß die Düse einen Bund (34) aufweist, der mit einem Ansatz des Lagerteils zusammenwirkt und daß das Lagerteil (10) mit der Motorwelle (2) verschraubbar ist.

9. Vorschub nach einem der Ansprüche 1 bis 8, dadurch gekennzeichnet, daß am Spannstück (21) eine die Planetenrollen (16, 17) übergreifende Hülse (26) angebracht ist, in die ein Lager (28) eingesetzt ist, das den Schweißdraht umgreift und eine Einlaufdüse (29) für den Schweißdraht aufnimmt.

10. Vorschub nach einem der Ansprüche 1 bis 9, dadurch gekennzeichnet, daß im Spannstück bzw. Stellring oder im Lagerteil eine die Planetenräder zusammendrückende Feder angeordnet ist.

11. Vorschub nach einem der Ansprüche 1 bis 10, dadurch gekennzeichnet, daß das Spannstück aus einer mit Gewinde versehenen Abstandshülse (40) besteht, die in einer Bohrung (43) im Lagerteil (10) angeordnet ist und zwei Schrauben (41, 42) aufnimmt, deren Schraubenköpfe sich auf den Hälften (14, 15) des Lagerteiles (10) abstützen und daß die Abstandshülse mit einer senkrecht zu deren Längserstreckung verlaufenden Bohrung (46) versehen ist, die für den Durchtritt des Schweißdrahtes und ggfs. der den Schweißdraht führenden Düse (9) bestimmt ist.

## Claims

1. Planet-wheel feed apparatus for fusion welding wires, with at least two planet wheels (16, 17) whose shafts (18) form an angle with the welding wire axis, are arranged radially with respect to the welding wire on a bearing element (10) which is driven by the motor shaft (2) and rotates about said welding wire, and are adapted to be pressed with preload against the welding wire, characterised in that the bearing element (10) comprises a sleeve axially slit over the main part of its length, that a planet wheel (16, 17) is arranged one at each part of the slit end (14, 15) of the bearing element, and that the infeed of the bearing element (10) and thus of the planet wheels (16, 17) is effected by axial or radial relative movement between bearing element (10) and a clamping element (21, 40, 41, 42), and the clamping element surrounds or extends through the bearing element (10).

2. Feed apparatus according to claim 1, characterised in that the clamping element (21) is provided with a calibrated bore (23) and the bearing element (10) is provided in the slit region with a well-defined external diameter which increases continuously towards the free end.

3. Feed apparatus according to claim 2, characterised in that the bearing element (10) is provided with an abutment (37) which limits the axial displacement of the bearing element (10) relatively to the clamping element (21).

4. Feed apparatus according to claim 1, characterised in that the external surface in the slit region of the bearing element (10) is of conical construction.

5. Feed apparatus according to one of claims 1 to 4, characterised in that that end of the bearing element (10) which is opposite from the planet wheels (16, 17) is provided with an external screwthreading (20) which extends through the clamping element (21), and the clamping of the clamping element (21) and the bearing part (10) is effected by a nut (22) which is screwed on to the screwthreading (20) and abuts on the clamping element.

6. Planet-wheel feed apparatus according to claim 1, characterised in that the infeed of the bearing part (10) and thus of the planet wheels (16, 17) is effected by a setting ring (21) which is fitted on to the bearing element (10) and the diameter of which is adjustable.

7. Feed apparatus according to one of claims 1 to 6, characterised in that in the bearing element there is arranged a nozzle (9) for the guiding of the welding wire, which nozzle ends immediately before the planet wheels (16, 17).

8. Feed apparatus according to claim 7, characterised in that the nozzle comprises a collar (34) which co-operates with a projection of the bearing element, and that the bearing element (10) is adapted to be screwed to the motor shaft (2).

9. Feed apparatus according to one of claims 1 to 8, characterised in that on the clamping element (21) there is arranged a sleeve (26) which extends over the planet wheels (16, 17) and into which there is placed a bearing (28) which extends about the welding wire and accomodates an inlet nozzle (29) for the welding wire.

10. Feed apparatus according to one of claims 1 to 9, characterised in that a spring pressing the planet wheels together is arranged in the clamping element or setting ring or in the bearing element.

11. Feed apparatus according to one of claims 1 to 10, characterised in that the clamping element comprises a screwthreaded spacer sleeve (40) which is arranged in a bore (43) in the bearing element (10) and receives two screws (41, 42) whose screw heads bear on the halves (14, 15) of the bearing element (10), and that the spacer sleeve is provided with a bore (46) which extends at right angles to the length of said sleeve and which is intended for the through passage of the welding wire and possibly the nozzle (9) guiding the welding wire.

## Revendications

1. Dispositif d'avance à roues planétaires pour des fils de soudure, fusibles, comportant au moins deux roues planétaires (16, 17), dont les axes (18) forment un angle avec l'axe du fil de soudure, par rapport auquel lesdites roues planétaires sont disposées radialement, sur un support (10), entraîné par l'arbre (2) d'un moteur et tournant autour dudit fil, lesdites roues planétaires pouvant être serrées sous tension contre le fil de soudure, dispositif caractérisé par le fait que le support (10) est constitué par une douille fendue dans la direction longitudinale sur une fraction importante de sa longueur, qu'une roue planétaire (16, 17) est disposée sur chaque partie de l'extrémité fendue (14, 15) du support (10), et que le réglage du support (10), et par suite des roues planétaires (16, 17), est obtenu grâce à un mouvement relatif, axial ou radial, entre ledit support (10) et une pièce de serrage (21, 40, 41, 42), ladite pièce de serrage entourant ou traversant ledit support (10).

2. Dispositif selon la revendication 1, caractérisé par le fait que la pièce de serrage (21) est pourvue d'un perçage calibré (23), et que le support (10) présente, dans sa partie fendue, un diamètre externe défini, qui va en augmentant de façon continue vers l'extrémité libre.

3. Dispositif selon la revendication 2, caractérisé par le fait que le support (10) est pourvu d'une butée (37), qui limite le déplacement axial du support (10) par rapport à la pièce de serrage (21).

4. Dispositif selon la revendication 1, caractérisé par le fait que la surface externe de la partie fendue du support (10) est conique.

5. Dispositif selon l'une quelconque des revendications 1 à 4, caractérisé par le fait que l'extrémité du support (10), qui est opposée aux roues planétaires (16, 17) est pourvue d'un filetage externe (20), qui traverse la pièce de serrage (21) et permet le serrage de ladite pièce de serrage (21) et du support (10) grâce à un écrou (22), vissé sur le filetage (20) et appliqué contre la pièce de serrage (21).

6. Dispositif selon la revendication 1, caractérisé par le fait que le réglage du support (10), et par suite des roues planétaires (16 et 17), a lieu au moyen d'une bague de réglage (21), qui est enfilée sur le support (10) et dont le diamètre est réglable.

7. Dispositif selon l'une quelconque des revendications 1 à 6, caractérisé par le fait qu'une buse (9) pour le guidage du fil de soudure est engagée dans le support, cette buse se terminant immédiatement en avant des roues planétaires (16, 17).

8. Dispositif selon la revendication 7, caractérisé par le fait que la buse présente un collet (34), qui coopère avec un prolongement du support (10), et que le support (10) peut être vissé sur l'arbre (2) du moteur.

9. Dispositif selon l'une quelconque des revendications 1 à 8, caractérisé par le fait qu'un manchon (26) est fixé à la pièce de serrage de façon à recouvrir les roues planétaires (16, 17), et que, dans ce manchon (26), est engagé un palier (28), qui entoure le fil de soudure et sert de logement pour une buse (29), servant à l'entrée du fil de soudure.

10. Dispositif selon l'une quelconque des revendications 1 à 9, caractérisé par le fait qu'un ressort, serrant les roues planétaires l'une vers l'autre, est disposé dans la pièce de serrage, dans la bague de réglage ou dans le support.

11. Dispositif selon l'une quelconque des revendications 1 à 10, caractérisé par le fait que la pièce de serrage est constituée par une douille d'écartement taraudée (40), qui est disposée dans un perçage (43) du support (10), et dans laquelle sont logées deux vis (41, 42), dont les têtes prennent appui sur les moitiés (14, 15) du support (10), et que ladite douille d'écartement est munie d'un perçage (46), qui s'étend perpendiculairement à son axe longitudinal, et qui est destiné au passage du fil de soudure et éventuellement de la buse (9) qui le guide.

Fig. 2

Fig. 1

Fig. 3

Fig. 4

0017877

Fig. 5

Fig. 6

3

8

5    36                    6    7

VI

34  35    16

2   9         29

30

10  21    17

4

13        16
21        38

32

17

0 017 877

3

Fig. 7

Fig. 8

3

5    36    6    7

8

2

14  44  41  46

10  15  43  42  45  40  17

16

9  29

30

4

VIII

VIII

44                16
46                41
                  9
43
40
    42  17  45

0 017 877